# EUROPÄISCHE PATENTSCHRIFT

(11) **EP 1 200 811 B1**
(45) Veröffentlichungstag und Bekanntmachung des Hinweises auf die Patenterteilung: **13.10.2004**
(21) Anmeldenummer: 00938816.6
(22) Anmeldetag: 23.06.2000
(51) Int. Cl.: G01M 15/00, F01N 11/00

(54) **VERFAHREN ZUR ZUSTANDSERFASSUNG EINES KATALYSATORSYSTEMS**
METHOD FOR DETECTING THE STATE OF A CATALYTIC CONVERTER SYSTEM
PROCEDE PERMETTANT DE DETECTER L'ETAT D'UN SYSTEME CATALYTIQUE

(30) Priorität: 16.07.1999 DE 19932715
(43) Veröffentlichungstag der Anmeldung: 02.05.2002
(73) Patentinhaber: Volkswagen Aktiengesellschaft, 38436 Wolfsburg (DE)
(72) Erfinder: LANG, Axel, D-38302 Wolfenbüttel (DE); WACHTENDORF, Axel, D-27798 Hude (DE); KAMMANN, Uwe, D-38378 Warberg (DE); LOECK, Harald, D-38442 Wolfsburg (DE); KREBS, Rudolf, D-38176 Wendeburg (DE); DAETZ, Michael, D-38473 Tiddische (DE); WITTIG, Frank, Michael, D-38112 Braunschweig (DE); KÖNIG, Axel, D-38448 Wolfsburg (DE)
(86) Internationale Anmeldenummer: PCT/EP2000/005821
(87) Internationale Veröffentlichungsnummer: WO 2001/006223

(56) Entgegenhaltungen:
- DE-A- 4 243 339
- DE-A- 19 527 774
- DE-A- 19 646 008
- US-A- 5 088 281
- US-A- 5 916 130
- US-A- 5 966 930

## Beschreibung

Die Erfindung betrifft ein Verfahren zur Zustandserfassung eines Katalysatorsystems in einem Abgaskanal einer Verbrennungskraftmaschine eines Kraftfahrzeugs mit den im Oberbegriff des Anspruchs 1 genannten Merkmalen.

Es ist bekannt, zur Reinigung eines Abgases der Verbrennungskraftmaschine in dem Abgaskanal Katalysatoren, insbesondere sogenannte 3-Wege-Katalysatoren, anzuordnen. Während eines Verbrennungsvorgangs eines Luft-Kraftstoff-Gemisches entstehen in wechselnden Anteilen Schadstoffe wie Rußpartikel, Stickoxide NO_{X}, Kohlenmonoxid CO und unvollständig verbrannte Kohlenwasserstoffe HC. Reduktionsmittel, also CO, HC und H₂, werden an den Katalysatoren mit Sauerstoff und/oder Stickoxiden zu Wasser und Kohlendioxid oxidiert. Oxidationsmittel wie NO_{X} werden dagegen an den Katalysatoren mit Hilfe der Reduktionsmittel zu Stickstoff reduziert.

Femer ist bekannt, einem solchen Katalysatorsystem Sensoren zuzuordnen, die beispielsweise einen Anteil einer Gaskomponente am Abgas (Lambdasonden, NO_{X}-Sensoren) oder eine Temperatur (Temperatursensoren) erfassen. Funktionsweise und Lage derartiger Sensoren in dem Katalysatorsystem sind bekannt.

In einem dynamischen Betrieb der Verbrennungskraftmaschine verschlechtert sich mit fortschreitender Betriebsdauer eine Konvertierungsrate für die Schadstoffe infolge reversibler und irreversibler Schädigungen der Katalysatoren. Es ist daher bekannt, mit Hilfe der Sensoren einen Schädigungsgrad des Katalysatorsystems zu erfassen, indem beispielsweise eine NO_{X}-Emission stromab des Katalysatorsystems mit einer NO_{X}-Emission stromauf des Katalysatorsystems verglichen wird. Zur Behebung von reversiblen Schädigungen werden dann üblicherweise Gegenmaßnahmen eingeleitet, wie eine Regeneration des Katalysators in reduktiver Atmosphäre. Überschreiten die irreversiblen Schädigungen einen vorgebbaren Schwellenwert, so müssen gegebenenfalls aufwendige Wartungsarbeiten durchgeführt werden.

Nachteilig bei den bekannten Verfahren ist es, daß in dem dynamischen Betrieb der Verbrennungskraftmaschine, insbesondere in Beschleunigungsphasen, die zugrunde liegenden Größen für eine Zustandserfassung des Katalysatorsystems stark schwanken. So ist bei einer hohen Leistungsanforderung an die Verbrennungskraftmaschine auch gleichzeitig die NO_{X}-Emission erhöht. Nachfolgend können dann kurzfristig die Schwellenwerte für den Schädigungsgrad des Katalysatorsystems überschritten werden, ohne daß jedoch tatsächlich eine derartig gravierende Schädigung vorliegt. Infolge dieser Fehldiagnose können dann unter Umständen unnötige Regenerations- oder Wartungsmaßnahmen eingeleitet werden.

Aufgabe des vorliegenden Verfahrens ist es, die Zustandserfassung des Katalysatorsystems unabhängig von dem dynamischen Betrieb der Verbrennungskraftmaschine (Fahrzyklus) zu gestalten.

Erfindungsgemäß wird diese Aufgabe durch das Verfahren zur Zustandserfassung des Katalysatorsystems mit den im Anspruch 1 genannten Merkmalen gelöst. Dadurch, daß
(a) wenigstens ein Betriebsparameter des Katalysatorsystems über einen vorgebbaren Zeitraum erfaßt wird,
(b) eine Gesamtenergieabgabe der Verbrennungskraftmaschine in dem vorgebbaren Zeitraum ermittelt wird und
(c) anhand eines Verhältnisses des wenigstens einen Betriebsparameters zu der Gesamtenergieabgabe eine Kennzahl k berechnet wird,
ist es vorteilhaft möglich, das dynamische Verhalten der Verbrennungskraftmaschine hinsichtlich der Schadstoffemission zu berücksichtigen.

Vorteilhafterweise wird, um statistische Ausreißer zu kompensieren, eine mittlere Kennzahl aus einer vorgebbaren Anzahl von Kennzahlen gebildet. In Abhängigkeit von der Kennzahl oder der mittleren Kennzahl kann, beispielsweise nach dem Überschreiten eines vorgebbaren Schwellenwertes, ein Wartungssignal erzeugt werden.

Die Gesamtenergieabgabe der Verbrennungskraftmaschine kann in bekannter Weise durch geeignete Sensoren erfaßt werden und in einem Motorsteuergerät als Meßsignal bereitgestellt werden. In gleicher Weise ist es jedoch auch möglich, leistungsäquivalente Größen, insbesondere eine kumulierte Luftmenge, zu erfassen. Es hat sich gezeigt, daß mit einer Änderung der Gesamtenergieabgabe eine proportionale Änderung ausgewählter Betriebsparameter des Katalysatorsystems einhergeht.

Als Betriebsparameter des Katalysatorsystems eignen sich insbesondere eine Katalysatortemperatur und eine HC-, CO-, O₂- oder NO_{X}-Masse im Abgas. Diese Betriebsparameter können in bekannter Weise als HC-, CO-, O₂- oder NO_{X}-Konzentrationen über die in dem Katalysatorsystem angeordneten Sensoren (Lambdasonden, NO_{X}-Sensoren) erfaßt und mit Hilfe berechneter oder gemessener Volumenströme ermittelt werden. Dabei genügt es beispielsweise, bei dem erfindungsgemäßen Verfahren die NO_{X}-Masse mittels eines stromab des Katalysators angeordneten NO_{X}-Sensors zu ermitteln.

In einer bevorzugten Ausgestaltung des Verfahrens wird die Zustandserfassung innerhalb einer Beschleunigungsphase des Kraftfahrzeugs durchgeführt. Zusätzlich kann die Zustandserfassung noch davon abhängig gemacht werden, ob sich ein Arbeitsmodus der Verbrennungskraftmaschine in einem vorgebbaren Lambdabereich befindet oder ob die Katalysatortemperatur in einem vorgebbaren Temperaturbereich liegt.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine schematische Darstellung einer Anordnung eines Katalysatorsystems in einem Abgaskanal einer Verbrennungskraftmaschine und
- Figur 2: ein Flußdiagramm zur Zustandserfassung des Katalysatorsystems nach einem Ausführungsbeispiel des erfindungsgemäßen Verfahrens.

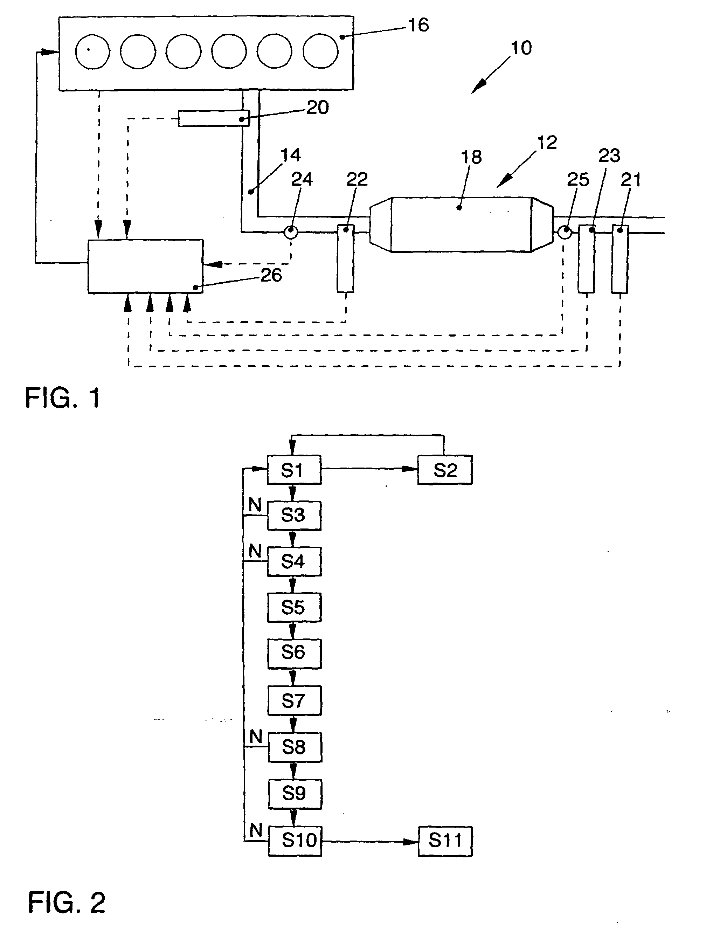

Die Figur 1 zeigt eine schematische Darstellung einer Anordnung 10 eines Katalysatorsystems 12 in einem Abgaskanal 14 einer Verbrennungskraftmaschine 16, insbesondere eines λ-regelbaren Otto-DI-Motors. Das Katalysatorsystem 12 umfaßt zumindest einen Katalysator 18, insbesondere einen 3-Wege-Katalysator, der von einem Abgas der Verbrennungskraftmaschine 16 durchströmt wird. Weiterhin können dem Katalysatorsystem 12 Sensoren zugeordnet werden, die eine Erfassung von Betriebsparametern des Katalysatorsystems 12 ermöglichen. Beispielsweise kann über die Temperatursensoren 24, 25 eine Abgastemperatur oder auch eine Katalysatortemperatur bestimmt werden. Daneben ist es möglich, einen Anteil ausgewählter Gaskomponenten am Abgas über Gassensoren zu bestimmen. So können beispielsweise Lambdasonden 20, 21 oder NO_{X}-Sensoren 22, 23 stromauf beziehungsweise stromab des Katalysators 18 in dem Abgaskanal 14 angeordnet sein. Die Sensoren liefern Meßdaten, die von einem Motorsteuergerät 26 erfaßt und ausgewertet werden können. Der Arbeitsmodus der Verbrennungskraftmaschine 16 läßt sich anhand eines Lambdawertes charakterisieren. So ist in einem Magerbetrieb λ > 1 und in einem Fettbetrieb λ < 1.

Während eines Verbrennungsvorgangs eines Luft-Kraftstoff-Gemisches in der Verbrennungskraftmaschine 16 entstehen in wechselnden Anteilen Schadstoffe, die in dem Katalysator 18 in einer Konvertierungsreaktion umgesetzt werden. So wird beispielsweise NO_{X} reduziert und CO und HC oxidiert. In welchem Umfang die Konvertierungsreaktion in dem Katalysator 18 abläuft, läßt sich anhand einer Konvertierungsrate ablesen. Diese kann beispielsweise durch einen Vergleich eines NO_{X}-Anteils stromauf und stromab des Katalysators 18 ermittelt werden (mittels der NO_{X}-Sensoren 22, 23). In gleicher Weise kann auch der stromauf und stromab durch die Lambdasonden 20, 21 erfaßte Lambdawert des Abgases genutzt werden. Das erfindungsgemäße Verfahren ermöglicht jedoch auch eine Diagnose des Katalysators 18 mit nur einem stromab des Katalysators 18 angeordneten NO_{X}-Sensors 23.
Ist die Konvertierungsrate des Katalysators 18 niedrig, so kann eine reversible oder irreversible Schädigung vorliegen. Als reversible Schädigung kommen beispielsweise in Frage eine Schwefelvergiftung, eine Rußbelegung oder eine Oxidation der Katalysatorkomponenten. Gegebenenfalls können geeignete Regenerationsmaßnahmen die reversible Schädigung beheben.

Demgegenüber führen irreversible Schädigungen, beispielsweise durch korrosive Prozesse, zu einer dauerhaften Minderung der Konvertierungsrate und müssen daher ab einem gewissen Ausmaß durch Wartungsmaßnahmen behoben werden.

In dem erfindungsgemäßen Verfahren werden zum einen die Betriebsparameter des Katalysatorsystems 12 mittels der Sensoren erfaßt und/oder über geeignete Modelle in bekannter Weise berechnet. Daneben werden ausgewählte Betriebsparameter der Verbrennungskraftmaschine 16 ebenfalls in bekannter Weise ermittelt. So wird eine Gesamtenergieabgabe der Verbrennungskraftmaschine 16 über einen vorgebbaren Zeitraum erfaßt. Da sich ein Verhältnis der Gesamtenergieabgabe zu dem wenigstens einen Betriebsparameter des Katalysatorsystems 12 proportional verhält, kann durch eine Berechnung einer dieses Verhältnis spiegelnden Kennzahl k eine leistungsunabhängige Zustandserfassung des Katalysators 18 erfolgen.

Die Figur 2 zeigt ein Flußdiagramm zur Zustandserfassung des Katalysatorsystems 12 nach dem erfindungsgemäßen Verfahren in einer beispielhaften Ausführung. Zunächst wird in einem Schritt S1 ermittelt, ob sich die Verbrennungskraftmaschine 16 gerade in einer Beschleunigungsphase des Kraftfahrzeugs befindet, denn es hat sich als besonders vorteilhaft erwiesen, die Zustandserfassung in einer solchen Betriebsphase der Verbrennungskraftmaschine 16 durchzuführen. Liegt keine Beschleunigungsphase vor, so erfolgt in einem Schritt S2 ein Abbruch, dem dann erneut der Schritt S1 folgen kann.

Befindet sich das Fahrzeug in einer Beschleunigungsphase, so wird in einem Schritt S3 anschließend ermittelt, ob die Katalysatortemperatur in einem vorgebbaren Temperaturbereich liegt. Femer muß ein Lambdawert des Abgases in einem vorgebbaren Lambdabereich liegen (Schritt S4). Liegen die genannten Bedingungen vor, so wird in einem Schritt S5 der Zeitraum der Zustandserfassung festgelegt und gegebenenfalls auch eine Anzahl n der Zustandserfassungen vorgegeben.

Wie bereits erläutert, erfolgt in einem Schritt S6 die Erfassung der Betriebsparameter des Katalysatorsystems 12 mit Hilfe der vorhandenen Sensoren. Hierzu eignen sich insbesondere die Katalysatortemperatur und eine HC-, CO-, O₂- oder NO_{X}-Masse im Abgas. Ferner erfolgt eine Messung der Gesamtenergieabgabe der Verbrennungskraftmaschine 16 über den vorgegebenen Zeitraum, direkt oder alternativ anhand einer leistungsäquivalenten Größe, wie einer kumulierten Luftmenge.
Ein Verhältnis der Gesamtenergieabgabe und des wenigstens einen Betriebsparameters des Katalysatorsystems 12 wird in einem Schritt S7 zur Berechnung einer Kennzahl k herangezogen.

In dem hier vorliegenden Ausführungsbeispiel wird zur Kompensation von statistischen Ausreißern die Ermittlung der Kennzahl n-mal wiederholt (Schritt S8) und in einem Schritt S9 wird eine mittlere Kennzahl kₘ als Mittelwert der n-zähligen Kennzahlen k gebildet. Anschließend wird in einem Schritt S10 die mittlere Kennzahl kₘ mit einem vorgebbaren Schwellenwert verglichen. Überschreitet die mittlere Kennzahl kₘ den Schwellenwert, so kann nachfolgend in einem Schritt S11 ein Wartungssignal erzeugt werden, das beispielsweise für eine On-Board-Diagnose genutzt werden kann.

## Patentansprüche

1. Verfahren zur Zustandserfassung eines Katalysatorsystems (18), wobei das Katalysatorsystem in einem Abgaskanal (14) einer Verbrennungskraftmaschine (16) eines Kraftfahrzeugs angeordnet ist und von einem zu reinigenden Abgas der Verbrennungskraftmaschine durchströmt wird, **dadurch gekennzeichnet, daß**
(a) wenigstens ein Betriebsparameter des Katalysatorsystems über einen vorgebbaren Zeitraum erfaßt wird,
(b) eine Gesamtenergieabgabe der Verbrennungskraftmaschine in dem vorgebbaren Zeitraum ermittelt wird und
(c) anhand eines Verhältnisses des wenigstens einen Betriebsparameters zu der Gesamtenergieabgabe eine Kennzahl k berechnet wird.

2. Verfahren nach Anspruch 1, **dadurch gekennzeichnet, daß** eine mittlere Kennzahl (kₘ) aus einer vorgebbaren Anzahl n von Kennzahlen (k) gebildet wird.

3. Verfahren nach Anspruch 1 oder 2, **dadurch gekennzeichnet, daß** in Abhängigkeit von der Kennzahl k oder der mittleren Kennzahl (kₘ) ein Wartungssignal erzeugt wird.

4. Verfahren nach Anspruch 3, **dadurch gekennzeichnet, daß** beim Überschreiten der Kennzahl k oder der mittleren Kennzahl km über einen vorgebbaren Schwellenwert ein Wartungssignal erzeugt wird.

5. Verfahren nach einem der vorhergehenden Ansprüche, **dadurch gekennzeichnet, daß** die Gesamtenergieabgabe anhand einer leistungsäquivalenten Größe, insbesondere einer kumulierten Luftmenge, erfaßt wird.

6. Verfahren nach einem der vorhergehenden Ansprüche, **dadurch gekennzeichnet, daß** die Betriebsparameter des Katalysatorsystems eine Katalysatortemperatur und eine HC-, CO-, O₂- oder NO_{X}-Masse im Abgas umfassen.

7. Verfahren nach einem der vorhergehenden Ansprüche, **dadurch gekennzeichnet, daß** der vorgebbare Zeitraum innerhalb einer Beschleunigungsphase des Kraftfahrzeugs liegt.

8. Verfahren nach einem der vorhergehenden Ansprüche, **dadurch gekennzeichnet, daß** die Zustandserfassung innerhalb eines vorgebbaren Lambdabereichs und/oder eines vorgebbaren Temperaturbereichs durchgeführt wird.

## Claims

1. Method for recording the state of a catalytic converter system (18), the catalytic converter system being arranged in an exhaust pipe (14) of an internal combustion engine (16) of a motor vehicle and having an exhaust gas from the internal combustion engine which is to be purified flowing through it, **characterized in that**
(a) at least one operating parameter of the catalytic converter system is recorded for a predeterminable period of time,
(b) a total release of energy from the internal combustion engine within the predeterminable period of time is determined, and
(c) a characteristic figure k is calculated on the basis of a ratio of the at least one operating parameter to the total energy release.

2. Method according to Claim 1, **characterized in that** a mean characteristic figure (kₘ) is formed from a predeterminable number n of characteristic figures (k).

3. Method according to Claim 1 or 2, **characterized in that** a maintenance signal is generated as a function of the characteristic figure k or the mean characteristic figure (kₘ).

4. Method according to Claim 3, **characterized in that** a maintenance signal is generated if the characteristic figure k or the mean characteristic figure kₘ exceeds a predeterminable threshold value.

5. Method according to one of the preceding claims, **characterized in that** the total energy release is recorded on the basis of a power-equivalent variable, in particular a cumulative air quantity.

6. Method according to one of the preceding claims, **characterized in that** the operating parameters of the catalytic converter system comprise a catalytic converter temperature and an HC, CO, O₂ or NOₓ mass in the exhaust gas.

7. Method according to one of the preceding claims, **characterized in that** the predeterminable period of time is within an acceleration phase of the motor vehicle.

8. Method according to one of the preceding claims, **characterized in that** the state recording is carried out within a predeterminable lambda range and/or a predeterminable temperature range.

## Revendications

1. Procédé de détection d'état d'un système de catalyseur (18), le système de catalyseur étant disposé dans un canal d'échappement (14) d'un moteur à combustion interne (16) d'un véhicule automobile et étant traversé par un gaz d'échappement du moteur à combustion interne destiné à être dépollué, **caractérisé en ce que**
(a) au moins un paramètre de service du système de catalyseur est détecté sur une période prédéfinissable,
(b) une distribution d'énergie globale du moteur à combustion interne est déterminée au cours de la période prédéfinissable,
(c) un indice k est calculé à l'aide d'une relation entre le paramètre de service qui est au moins au nombre d'un et la distribution d'énergie globale.

2. Procédé selon la revendication 1, **caractérisé en ce qu'**un indice moyen (kₘ) est formé à partir d'un nombre prédéfinissable n d'indices (k).

3. Procédé selon l'une quelconque des revendications 1 ou 2, **caractérisé en ce qu'**un signal de maintenance est généré en fonction de l'indice k ou de l'indice moyen (kₘ).

4. Procédé selon la revendication 3, **caractérisé en ce qu'**un signal de maintenance est généré lors du dépassement de l'indice k ou de l'indice moyen kₘ au-delà d'une valeur seuil prédéfinissable.

5. Procédé selon l'une quelconque des revendications précédentes, **caractérisé en ce que** la distribution d'énergie globale est détectée à l'aide d'une dimension d'équivalence de puissance, notamment d'une quantité d'air cumulée.

6. Procédé selon l'une quelconque des revendications précédentes, **caractérisé en ce que** les paramètres de service du système de catalyseurs comprennent une température de catalyseur et une masse de HC, de CO, d'O₂ et de NOₓ dans le gaz d'échappement.

7. Procédé selon l'une quelconque des revendications précédentes, **caractérisé en ce que** la période prédéfinissable se situe à l'intérieur d'une phase d'accélération du véhicule automobile.

8. Procédé selon l'une quelconque des revendications précédentes, **caractérisé en ce que** la détection d'état est réalisée au sein d'une plage lambda prédéfinissable et/ou d'une plage de température prédéfinissable.
